# EUROPEAN PATENT SPECIFICATION

(11) **EP 3 352 412 B1**
(45) Date of publication and mention of the grant of the patent: **27.05.2020**
(21) Application number: 16845653.1
(22) Date of filing: 05.09.2016
(51) Int. Cl.: H04L 9/32, H04W 12/06, H04L 29/06, G06Q 20/32, G06Q 20/38

(54) **IDENTITY AUTHENTICATION METHOD AND DEVICE**
IDENTITÄTSAUTHENTIFIZIERUNGSVERFAHREN UND -VORRICHTUNG
PROCÉDÉ ET DISPOSITIF D'AUTHENTIFICATION D'IDENTITÉ

(30) Priority: 14.09.2015 CN 201510583968
(43) Date of publication of application: 25.07.2018
(73) Proprietor: Alibaba Group Holding Limited, Grand Cayman (KY)
(72) Inventor: SUN, Yuanbo, Hangzhou 310099 (CN)
(74) Representative: Conroy, John
(86) International application number: PCT/CN2016/097999
(87) International publication number: WO 2017/045539

(56) References cited:
- CN-A- 101 616 002
- CN-A- 101 655 916
- CN-A- 103 310 142
- CN-A- 104 331 796
- JP-A- 2012 038 127
- US-A1- 2005 101 295
- US-A1- 2007 263 710
- US-A1- 2013 054 960

## Description

This application claims priority to Chinese Patent Application No. 201510583968.6 filed on September 14, 2015 and entitled "METHOD AND DEVICE FOR IDENTITY AUTHENTICATION".

### Technical Field

The present application relates to the field of computer technologies, and in particular to a method and a device for identity authentication.

### Background Art

A wearable device is a portable device that is directly worn on the body of a user or integrated into clothes or an accessory of the user. Currently, there are mainstream product forms including products in a watch category worn on the wrist (including products such as watches and wrist straps), a shoes category worn on feet (including shoes, socks, or other future products worn on legs), and a glass category worn on the head (including glasses, helmets, headbands, and the like); and there are also various non-mainstream product forms such as smart clothes, schoolbags, crutches, and accessories.

Because wearable devices can be portable when worn on the body, the wearable devices are expected to be more involved in identity authentication or operate a corresponding processing process for a number of services, so as to achieve closer interaction with users and improve security.

Therefore, how to implement payment authentication or an identity authentication operation in another operation process based on a wearable device has become one of the research focuses in the field of computer technologies.

Payment authentication, a special type of identity authentication, refers to an operation behavior of judging legitimacy of a fund transfer-related payment behavior that is currently performed by a user. As related to fund, such identity authentication is particularly challenged in terms of security and convenience.

In the prior art, a conventional procedure of implementing identity authentication, especially a payment authentication operation process, based on a wearable device is substantially as follows:
After a mobile terminal bound to the wearable device receives a payment authentication request, the mobile terminal is responsible for authenticating legitimacy of the payment authentication request. After authentication succeeds and fee deduction is completed, the mobile terminal sends corresponding fee deduction success information to the wearable device. Otherwise, the mobile terminal sends corresponding fee deduction failure information to the wearable device, which displays a fee deduction result.

In a process of implementing the present application, the applicant found that the conventional wearable device-based identity authentication method, especially the payment authentication method, has at least the following problems:
In the prior art, computing related to authentication on legitimacy of the payment authentication request is all implemented on the mobile terminal, and the wearable device is only responsible for displaying the fee deduction result.

Further, when related computing is implemented on the mobile terminal, a user has a weak sense of participation in a payment process, and the payment process has low security, which affects a payment success rate.

Therefore, persons skilled in the art urgently need to find a method which can enhance a user's sense of participation in an identity authentication process, improve the security of the authentication process, and increase an authentication success rate.

US 2013/0054960 describes a user device that includes a processor and memory configured to store an application, a session manager, an application identifier, and a shared library. The processor is configured by the session manager to communicate the application identifier and the application identifier data to an authentication server and permit the execution of the application in response to authentication of the application by the authentication server.

US 2005/0101295 describes a method for supporting cashless payment. A mobile subscriber identity stored in the subscriber identification module of the mobile terminal is sent to a payment interworking unit. The payment interworking unit transmits the mobile subscriber identity to an authentication server of a mobile communication system which replies an authentication number and a signed response. The authentication number is sent to the mobile terminal which calculates a signed response and transmits the signed response to the payment interworking server. This server compares the signed responses received from the authentication server and from the mobile terminal and sends a confirmation message to a P0S unit or a billing system, if the received signed result is correct.

### Summary of the Invention

Embodiments of the present application provide a method and a device for identity authentication, so as to enhance a user's sense of participation in an identity authentication process, improve the security of the identity authentication process, and increase an identity authentication success rate, especially for a payment authentication process.

To achieve the foregoing technical objectives, the present application provides an identity authentication method, implemented to a terminal device including a preset standard interface configured to communicate with a service application of a dedicated type, and the method specifically includes:
receiving, by the terminal device via the preset standard interface, an identity authentication request message sent by a server corresponding to the service application of the dedicated type, wherein the identity authentication request message is sent by the server to the terminal device after the server receives a service request of the service application of the dedicated type;
verifying, by the terminal device, a signature in the identity authentication request message according to a public key of the service application of the dedicated type;
acquiring, by the terminal device if verification succeeds, service authentication information of an account corresponding to the identity authentication request message from locally pre-stored service authentication information; and
returning, by the terminal device, a verification response message that carries the acquired service authentication information to the server via the preset standard interface.

In addition, the embodiments of the present application further provide an identity authentication method, implemented to a server corresponding to a service application of a dedicated type, wherein the server communicates with a terminal device via a preset standard interface included in the terminal device, and the method specifically includes:
receiving, by the server, a service request of the service application of the dedicated type;
sending, by the server, an identity authentication request message to the terminal device via the preset standard interface included in the terminal device;
receiving, by the server when an identity authentication request succeeds, a verification response message that is returned by the terminal device via the preset standard interface and carries service authentication information; and
processing, by the server, the service request according to the service authentication message.

In addition, the embodiments of the present application further provide a terminal device, specifically including:
a preset standard interface configured to communicate with a service application of a dedicated type;
a receiving module configured to receive, via the preset standard interface, an identity authentication request message sent by a server corresponding to the service application of the dedicated type, wherein the identity authentication request message is sent by the server to the terminal device after the server receives a service request of the service application of the dedicated type;
a verification module configured to verify, according to a public key of the service application of the dedicated type, a signature in the identity authentication request message received by the receiving module;
an acquisition module configured to acquire, when the verification by the verification module succeeds, service authentication information of an account corresponding to the identity authentication request message from service authentication information pre-stored in the terminal device; and
a feedback module configured to return a verification response message that carries the service authentication information acquired by the acquisition module to the server via the preset standard interface.

In addition, the embodiments of the present application further provide a server, corresponding to a service application of a dedicated type, and specifically including:
a sending module configured to send, when a service request of the service application of the dedicated type is received, an identity authentication request message to a terminal device via a preset standard interface included in the terminal device;
a receiving module configured to receive, when an identity authentication request succeeds, a verification response message that is returned by the terminal device via the preset standard interface and carries service authentication information; and
a processing module configured to process the service request according to the service authentication message received by the receiving module.

Compared with the prior art, the technical solutions proposed in the embodiments of the present application include the following beneficial technical effects:
The embodiments of the present application disclose a method and a device for identity authentication, implemented to a system composed of a server and a terminal device including a preset standard interface configured to communicate with a service application of a dedicated type. By means of the technical solutions proposed in the present application, when an identity authentication operation is required, the server can request service authentication information of an account of the service application of the dedicated type from the terminal device via the preset standard interface, and the terminal device can perform security verification on this process according to a corresponding verification rule, and feed locally pre-stored service authentication information back to the server for subsequent processing only when the verification succeeds. As such, the security of an identity authentication process can be ensured by means of the preset standard interface bound to the service application of the dedicated type and security verification of the terminal device, and a terminal device operator's sense of participation in this process can be enhanced by using the identity authentication information currently stored in the terminal device. When the terminal device is specifically a wearable device, a user's sense of participation in the identity authentication process can be enhanced, the security of the identity authentication process can be improved, and an identity authentication success rate can be increased, especially for a payment authentication process.

### Brief Description of the Drawings

To describe the technical solutions of the present application more clearly, the accompanying drawings for illustrating the embodiments are introduced briefly in the following. Apparently, the drawings in the following description merely show some embodiments of the present application, and persons skilled in the art may derive other drawings based on these accompanying drawings without creative efforts.
FIG. 1 is a schematic flowchart of an identity authentication method according to an embodiment of the present application;
FIG. 2 is a schematic flowchart of a binding process in an identity authentication method according to an embodiment of the present application;
FIG. 3 is a schematic flowchart of an authentication process in an identity authentication method according to an embodiment of the present application;
FIG. 4 is a schematic structural diagram of a terminal device according to an embodiment of the present application; and
FIG. 5 is a schematic structural diagram of a server according to an embodiment of the present application.

### Detailed Description

As stated in the background art of the present application, in the prior art, computing related to authentication on legitimacy of an identity authentication request, especially a payment authentication request, is all implemented on a mobile terminal, and an associated wearable device is only responsible for displaying a processing result; as a result, in such an operation process, a user has a weak sense of participation in an identity authentication process, especially in a payment process, and the process has low security, which may in turn affects a service success rate.

However, the inventor of the present application found that, as compared with a mobile terminal, a wearable device has the following advantages during processing:
1. It is more convenient to operate, and a corresponding user's sense of participation in a corresponding processing process is also enhanced.
2. It is more secure to operate with the wearable device, for example, the operation is more private and can not easily be peeped, and the security of a corresponding payment process is also improved.

Based on the two advantages above, processing with a wearable device can increase a success rate of a payment process.

Based on the analysis above, to solve the foregoing technical problems, the embodiments of the present application disclose an identity authentication method that is implemented on a wearable device. Certainly, this method may also be implemented to a terminal device of another type, and such a change does not affect the protection scope of the present application.

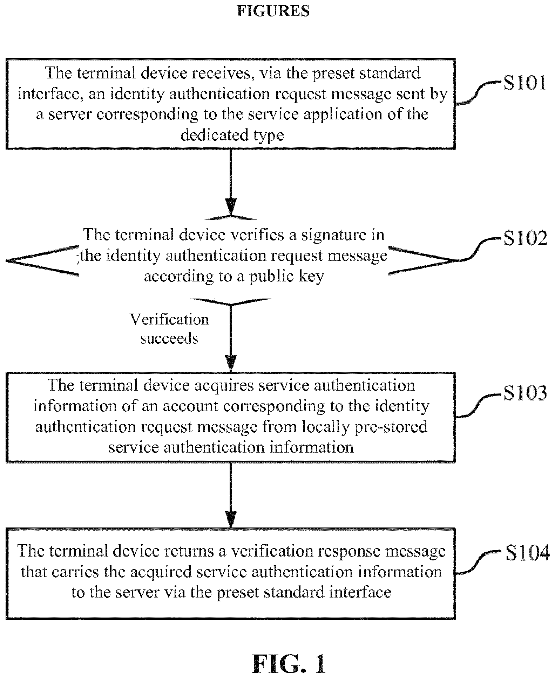

As shown in FIG. 1, which is a schematic flowchart of an identity authentication method according to a first embodiment of the present application, the method is implemented to a terminal device including a preset standard interface configured to communicate with a service application of a dedicated type, and the method specifically includes:
Step S101. The terminal device receives, via the preset standard interface, an identity authentication request message sent by a server corresponding to the service application of the dedicated type.

The identity authentication request message is sent by the server to the terminal device after the server receives a service request of the service application of the dedicated type.

In a specific application scenario, the service application of the dedicated type as described herein mainly refers to a service application of a type that matches the preset standard interface and requires an identity authentication operation during specific service execution. After a type matches a preset standard interface (which may be defined over the interface or limited in a standard protocol), only a message triggered by a service application that matches the type is transmitted via the preset standard interface. Such a limitation can effectively filter out an information exchange process of a service application of another type, preventing other information from interfering with an information exchange process of the service application of the dedicated type, and improving corresponding information processing efficiency. In addition, a limitation on the dedicated type can also effectively shield incoming or attacking of other forged packets or signaling via the preset standard interface, improving the security of an identity authentication process.

It should be noted that, in subsequent processing, information exchange between the terminal device and the service application of the dedicated type is implemented via the preset standard interface, and is correspondingly described in a subsequent corresponding step, and details are not described here.

By means of the limitation on the preset standard interface, a message sent by another service application is not received by the terminal device via the preset standard interface, and certainly the technical solution proposed in this embodiment may not be triggered. As such, information filtering in the identity authentication process can be implemented, interference from another message can be avoided, and the security of the identity authentication process can be improved.

Step S102. The terminal device verifies a signature in the identity authentication request message according to a public key of the service application of the dedicated type.

If verification succeeds, it can be considered that the identity authentication request message is a legitimate message sent by the service application of the dedicated type, and is secure, and step S103 can be further performed.

If verification fails, it can be considered that the identity authentication request message is not a legitimate message sent by the service application of the dedicated type, and therefore the identity authentication request message is directly discarded.

Step S103. The terminal device acquires service authentication information of an account corresponding to the identity authentication request message from locally pre-stored service authentication information.

Specifically, in this embodiment, before this step is performed, an operation process of locally pre-storing service authentication information by the terminal device is specifically as follows:
First, the terminal device receives, via the preset standard interface, a binding registration request message for an account that is sent by the service application of the dedicated type.

Then, the terminal device verifies legitimacy of the binding registration request message, that is, verifies a signature in the binding registration request message according to the public key of the service application of the dedicated type.

If verification succeeds, the terminal device acquires service authentication information carried in the binding registration request message, and correspondingly stores the service authentication information and identity identification information of the account locally for a subsequent authentication operation, wherein the identity identification information is used to indicate the account to which the service authentication information belongs.

If verification fails, it can be considered that the binding registration request message is not a legitimate message sent by the service application of the dedicated type, and is invalid, and therefore the binding registration request message is directly discarded.

Finally, after completing storage of the service authentication information and the identity identification information, the terminal device generates a registration response message according to identifier information of the terminal device, and returns the registration response message to the service application of the dedicated type via the preset standard interface.

In a specific application scenario, a process of generating the registration response message is specifically as follows:
acquiring, by the terminal device, unique identifier information and device model information of the terminal device;
assembling, by the terminal device, the unique identifier information and the device model information according to a data format specified by the service application of the dedicated type; and
signing, by the terminal device, the assembled information by using a local private key, and generating the registration response message.

Certainly, considering that an account user may change service authentication information (for example, a payment password, a payment gesture, or the like), currently stored information may be further updated subsequently by using the following procedure:
Step A. The terminal device receives, via the preset standard interface, a service authentication information update request message for an account that is sent by the service application of the dedicated type.
Step B. The terminal device verifies a signature in the service authentication information update request message according to the public key of the service application of the dedicated type.

If verification fails, it can be considered that the service authentication information update request message is not a legitimate message sent by the service application of the dedicated type, and is invalid, and therefore the service authentication information update request message is directly discarded.

If verification succeeds, step C is performed.

Step C. The terminal device judges whether identity identification information corresponding to locally stored service authentication information is consistent with identity identification information carried in the service authentication information update request message.

If they are consistent, it can be determined that service authentication information of the same account has been stored in the terminal device, which matches the service authentication information update request message, and a subsequent operation of step D is triggered.

On the contrary, if they are inconsistent, it can be determined that service authentication information of the same account is not stored in the terminal device, which cannot match the service authentication information update request message, there is no object to be updated, and subsequent processing may be determined according to an actual need.

Step D. The terminal device acquires, service authentication information carried in the service authentication information update request message.

Step E. The terminal device judges whether version information of the acquired service authentication information is higher than version information of the current locally stored corresponding service authentication information.

By means of this step, it can be determined whether service authentication information currently stored in the terminal device needs to be updated.

If the judgment result is yes, it can indicate that the local service authentication information is not of a latest version, and needs to be updated, and the terminal device replaces the currently stored corresponding service authentication information with the acquired service authentication information.

If the judgment result is no, that is, the version information of the acquired service authentication information is equal to or lower than the version information of the current locally stored corresponding service authentication information, it can indicate that the local service authentication information does not need to be updated, and the current update operation is terminated.

Step S104. The terminal device carries the acquired service authentication information in a verification response message, and returns the verification response message to the server via the preset standard interface.

In a specific application scenario, for the sake of security, when payment credential information is returned in this step, the service authentication information may be encrypted, and saved as a response data packet. After receiving the response data packet, the server obtains the service authentication information by decryption, so as to complete a subsequent service processing operation.

In a specific application scenario, after this step is completed, a corresponding acknowledgment process may be further included, which is specifically described as follows:
receiving, by the terminal device via the preset standard interface, an acknowledgment request that is sent by the server corresponding to the service application of the dedicated type;
acquiring, by the terminal device, acknowledgment manner type information included in the acknowledgment request; and
completing, by the terminal device, a corresponding acknowledgment operation according to the acknowledgment manner type information.

Specifically, in this embodiment, the acknowledgment manner type information included in the acknowledgment request may include any one or any combination of the following acknowledgment manners:
text acknowledgment, sound acknowledgment, and vibration acknowledgment.

Correspondingly, for example, the text acknowledgment may be directly displaying a line of characters "your payment succeeded", "service processing succeeded", or the like on the terminal device, and certainly, a precondition is that the terminal device has a display screen. The sound acknowledgment may be emitting a preset "ringtone". The vibration acknowledgment may be vibrating for a preset number of times or a continuous period of time.

This acknowledgment operation is mainly performed to enable the user to accurately know a service processing result. Certainly, it may also be set that no further operation is required when service processing succeeds. Such setting may be adjusted according to an actual need, and does not affect the protection scope of the present application.

The foregoing description process describes a solution implementation process on a terminal device side. Correspondingly, the embodiments of the present application also propose a solution implementation procedure on a server side. The method is implemented to a server corresponding to a service application of a dedicated type, wherein the server communicates with a terminal device via a preset standard interface included in the terminal device, and the method specifically includes the following steps:
First, the server receives a service request of the service application of the dedicated type.

Then, the server sends an identity authentication request message to the terminal device via the preset standard interface included in the terminal device.

When an identity authentication request succeeds, the server receives a verification response message that is returned by the terminal device via the preset standard interface and carries service authentication information.

The server processes the service request according to the service authentication message.

In a specific application scenario, before the server receives the service request of the service application of the dedicated type, a process of pre-storing service authentication information is further included:
sending, by the server, a binding registration request message for an account to the terminal device via the preset standard interface included in the terminal device, wherein the binding registration request message carries service authentication information of the account; and
receiving, by the server when registration binding succeeds, a registration response message that is returned by the terminal device via the preset standard interface, and acknowledging, by the server, that the terminal device is successfully bound to the account, wherein the registration response message carries identifier information of the terminal device.

This pre-storage process corresponds to the operation process of locally pre-storing service authentication information by the terminal device in step S103, and details are not described here again.

Further, after the acknowledging, by the server, that the terminal device is successfully bound to the account, the method further comprises:
sending, by the server when the service authentication information of the account needs to be updated, a service authentication information update request message for the account to the terminal device via the preset standard interface included in the terminal device, wherein the service authentication information update request message carries the service authentication information needing to be updated of the account.

This process also corresponds to the processing process of step A to step E in step S103, and details are not described here again.

According to another aspect, after the server processes the service request according to the service authentication message, a corresponding acknowledgment process may be further included, which is specifically described as follows:
sending, by the server after processing of the service request is completed, an acknowledgment request carrying acknowledgment manner type information to the terminal device via the preset standard interface included in the terminal device, so that the terminal device completes a corresponding acknowledgment operation according to the acknowledgment manner type information.

A process after the acknowledgment request is sent corresponds to a subsequent acknowledgment process in step S104, and details are not described here again.

It should be noted here that, in the foregoing steps, each message received by the terminal device via the preset standard interface includes at least operation type information and signature information of the message.

The signature information needs to match the service application of the dedicated type corresponding to the preset standard interface, and therefore can be verified according to the public key of the service application of the dedicated type. If verification fails, it certainly may be determined that the current message does not match the dedicated type. As such, an unrelated message can be filtered out, and the security can be improved.

Compared with the prior art, the technical solutions proposed in the embodiments of the present application include the following beneficial technical effects:
The embodiments of the present application disclose a method and a device for identity authentication, implemented to a system composed of a server and a terminal device including a preset standard interface configured to communicate with a service application of a dedicated type. By means of the technical solutions proposed in the present application, when an identity authentication operation is required, the server can request service authentication information of an account of the service application of the dedicated type from the terminal device via the preset standard interface, and the terminal device can perform security verification on this process according to a corresponding verification rule, and feed locally pre-stored service authentication information back to the server for subsequent processing only when the verification succeeds. As such, the security of an identity authentication process can be ensured by means of the preset standard interface bound to the service application of the dedicated type and security verification of the terminal device, and a terminal device operator's sense of participation in this process can be enhanced by using the identity authentication information currently stored in the terminal device. When the terminal device is specifically a wearable device, a user's sense of participation in the identity authentication process can be enhanced, the security of the identity authentication process can be improved, and an identity authentication success rate can be increased, especially for a payment authentication process.

The technical solutions in the present application are clearly and completely described in the following with reference to the accompanying drawings in the present application. Apparently, the embodiments to be described are merely some rather than all of the embodiments of the present application. All other embodiments obtained by persons of ordinary skill in the art based on the embodiments of the present application without creative efforts shall fall within the protection scope of the present application.

Considering that a wearable device is carried along with a user and provides security assurances and that a payment type service has a high standard requirement on security, in a subsequent embodiment of the present application, the technical solutions are described by using an example in which the wearable device implements a payment authentication process. Correspondingly, the foregoing terminal device is a subsequent wearable device, the foregoing service application of the dedicated type is a subsequent payment type service application, and the corresponding dedicated type is payment.

It should be noted that it is merely a preferred embodiment, and the technical solutions in the present application can also be implemented to a terminal device of another type and an identity authentication process of a service of another type, and such a change does not affect the protection scope of the present application.

First, an application scenario of the technical solutions proposed in the embodiments of the present application is introduced as follows:
(1) Wearable device: It is a device that is wearable and also has a payment function, for example, a smart watch, a smart badge, or smart glasses. The device has a payment function itself, or an application having a payment function is installed thereon, and therefore, a corresponding payment operation can be performed for an associated account. The device communicates, via a preset standard interface, with a server of a payment type application and a payment-enabled terminal on which the payment type application is installed, wherein the preset standard interface may be a standard interface conforming to a payment protocol.
(2) Payment-enabled terminal: It is, for example, a smart phone, a smart tablet computer (Pad), and has a payment function itself, or an application having a payment function is installed thereon. The terminal is associated with a same user account as the wearable device. As required or set by a user, the terminal needs to acknowledge a payment operation by using the wearable device. The device also communicates with the wearable device and the payment server via a preset standard interface. The preset standard interface may be a standard interface conforming to a payment protocol.
(3) Payment server: It is a server having payment processing and verification capabilities, and finally performs the payment operation after verification succeeds.

Based on the service architecture above, the preset standard interface may be configured according to a corresponding protocol. For a specific example proposed in the embodiments of the present application, the interface may be configured by using, for example, a content protocol:
An ATT format configuration protocol standard is adopted, and UUID is used to identify a unique dedicated type attribute.

For a specific identity authentication process, a protocol of the preset standard interface may be configured as including one service and four characteristics, specifically:
Service UUID: 0x0001000 (for determining a dedicated type of a corresponding service application); and
Characteristic: There are four characteristics, namely, registration, verification, key update, and acknowledgment (vibration). Corresponding characteristic UUIDs are: 0x00000011, 0x00000012, 0x00000013, and 0x00000014, so that function differences between specific interfaces can be identified.

Certainly, such setting is merely a specific example. During actual application, the function differences above may not be distinguished, and instead, different processing is triggered according to a type identifier of a message. Certainly, more characteristics may be set according to different service content. Such changes do not affect the protection scope of the present application.

Based on the system scenario above, and further considering that the wearable device has limited computing and storage capabilities and has a requirement on power consumption, the wearable device is responsible for processing operations as few as possible.

In the technical solutions proposed in the present application, the wearable device stores key verification information (that is, the service authentication information), and feeds back the verification information to the payment server only when it is verified that the identity is legitimate, to smoothly complete the payment operation.

Operation procedures in various stages are descried in the following in chronological order.

### 1. Binding stage

In this stage, a binding relationship between the wearable device and a specific account needs to be established, and payment credential information (that is, a special case of the service authentication information, wherein there is similar setting in subsequent descriptions, which is not stated one by one) of the bound account is synchronously stored in the wearable device.

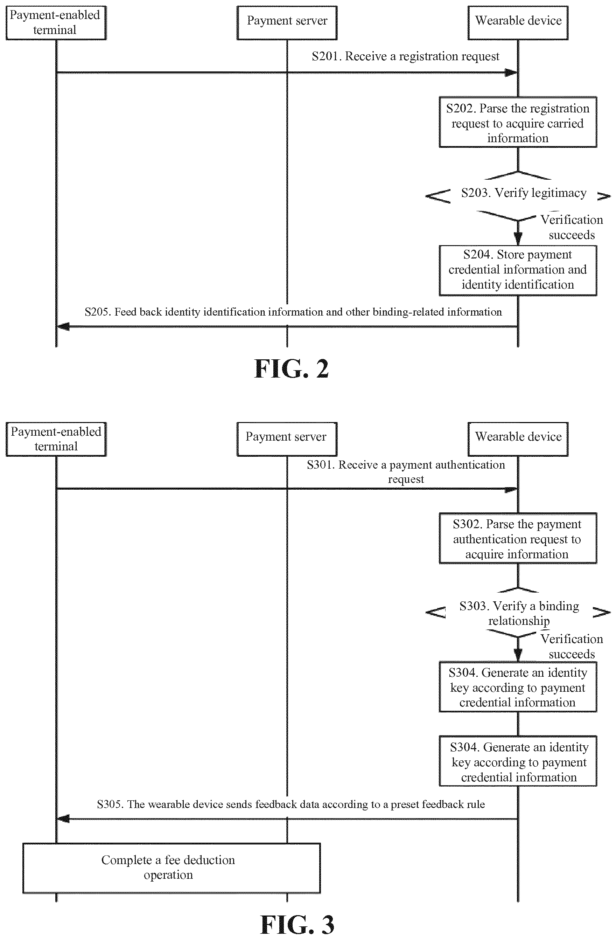

Specifically, as shown in FIG. 2, which is a schematic flowchart of a binding process in an identity authentication method according to an embodiment of the present application, in this embodiment, the wearable device locally stores service authentication information according to a preset registration policy, to complete binding to an account of a service application of a corresponding dedicated type, and a specific procedure is as follows:
Step S201. The wearable device receives a registration request via the preset standard interface.

In a specific application scenario, if account identity verification based on a network side is required, the foregoing registration process may be triggered by using the payment server; if local identification information (for example, local key negotiation) matching is performed, a payment type service application on the payment-enabled terminal may directly initiate the registration process to the wearable device. However, no matter which initiation manner is implemented, because a type of a processed service is a payment type service, operations all need to be completed via the preset standard interface. As such, interference from a service message of another type can be shielded, and the security of a service operation of the current type can be improved.

Considering that a final objective of this binding process is to synchronously store verification information (that is, the service authentication information), if the payment type service application on the payment-enabled terminal directly initiates the registration process to the wearable device, the payment type service application on the payment-enabled terminal needs to directly provide corresponding verification information.

No matter which processing solution is implemented, considering that the binding is binding based on a same payment account, a difference between specific trigger forms is omitted in a subsequent process, and the payment type service application of the payment account is directly used as a trigger entity to perform a corresponding binding operation.

Step S202. The wearable device parses the registration request according to a preset data format standard, to acquire information carried therein.

The payment type service application initiates the registration request to the preset standard interface of the wearable device (for example, for the binding process directly initiated by the payment type application on the payment-enabled terminal, the registration request may be directly transmitted by means of Bluetooth; for the binding process initiated by using the payment server, the registration request may be transmitted to the preset standard interface of the wearable device by using the payment server). After receiving the data, the wearable device performs deserialization (a deserialization operation is a parsing operation) processing according to a preset data transmission format, to obtain verification information carried in the registration request.

It should be further noted that the registration request and another message that is sent to the preset standard interface hereinafter are used to complete a corresponding legitimacy verification operation, and need to carry verification type information and specific signature information, which are key verification information necessarily carried. A specific description is provided here, and other messages are similar thereto, and are not described repeatedly one by one.

### A. Verification type information:

Currently, there are two verification solutions available to the wearable device. One of them is a relatively secure solution, in which RSA is adopted for encryption and signature verification, and the other one is a solution that does not have high programming performance and has relatively low security, in which symmetric encryption is adopted.

B. Signature information: It is signature information generated according to a specific signature algorithm, and other messages hereinafter are similar thereto, for which signature information can be generated according to a specific signature algorithm by using information that needs to be separately carried therein.

In a specific application scenario, signature algorithm types mainly include sha256 and rsawithsha256.

In a specific application scenario, in addition to the key verification information above, the registration request may include the following several parts of content, and certainly, on the precondition that the registration binding operation can be implemented, the type of information carried in the registration request does not affect the protection scope of the present application:
(1) Packet-related information: It is information used to identify the registration request, and includes: a length of signed data and the signed data.
(2) Identity-related information: It is used to verify legitimacy of the registration request, and includes: signature information (that is, the identity identification information) of the payment service, length information of the signature information of the payment service, Challenge information, and length information of the Challenge information.
(3) Algorithm-related information: It is used to parse or generate a signature, and includes: signature algorithm type information and length information of the signature algorithm.
   In addition, it should be noted that, in this embodiment, the signature algorithm may be a Secure Hash Algorithm SHA256 or a non-symmetric hash algorithm RSA with SHA 256. In a specific environment, the signature algorithm may also be another signature algorithm, and details are not described here.
(4) Payment-credential-related information: It is used to verify a payment operation in a subsequent process, and includes: a shared key (that is, the payment credential information) generated by the payment-enabled terminal and used to support the payment server to complete a fee deduction operation, and length information of the shared key.

Step S203. The wearable device verifies legitimacy of the registration request.

In a specific application scenario, after the information deserialization operation succeeds, the wearable device performs a verification operation according to the preset verification information. Specifically, the wearable device may perform, according to a built-in public key for the payment service, a verification operation on the signature-related information that is obtained after the deserialization operation is performed in step S202.

If verification succeeds, step S204 is performed. If verification fails, the wearable device determines that the registration request is invalid or illegitimate, and therefore directly discards the registration request.

Step S204. The wearable device acquires and stores payment credential information and identity identification information.

The wearable device performs, according to a built-in private key, a decryption operation on the payment-credential-related information that is obtained after the deserialization operation is performed in step S202, to acquire the payment credential information.

The wearable device acquires device-identifier-related information that is obtained after the deserialization operation is performed in step S202.

The wearable device locally stores the acquired payment credential information and identity identification information, for example, stores the information in a local Read-Only Memory (ROM).

So far, storage for the binding relationship has been completed on the wearable device side, and in a subsequent operation, a binding status needs to be fed back to the payment type service application on the peer payment-enabled terminal. The binding operation is truly completed only after the binding relationship is successfully processed on both sides.

Step S205. The wearable device feeds back identity identification information and other binding-related information according to a preset feedback rule.

The wearable device generates a corresponding registration response message according to a preset feedback information assembly rule by using a unique ID (the identity identification information), a device model, and other information, and sends the registration response message to a registration request sender. That is, if the payment-enabled terminal directly initiates the registration request, the registration response message is directly fed back to the payment-enabled terminal; if the registration request is initiated by using the payment server on the network side, the registration response message is fed back to the payment server, and then the payment server performs a subsequent binding acknowledgment feedback.

It should be noted that the encryption/decryption manner above is assurance work for the sake of security, and on the precondition that security can be ensured, neither whether the encryption/decryption manner is used, nor whether another security protection measure is taken affects the protection scope of the present application.

In a specific application scenario, in addition to the key verification information, the registration response message may include the following several parts of content, and certainly, on the precondition that the registration binding operation can be implemented, the type of information carried in the registration response message does not affect the protection scope of the present application:
(1) Packet-related information: It is information used to identify the registration request, and includes: a length of signed data and the signed data.
(2) Identity-related information: It is used to verify legitimacy of the registration request, and includes: signature information (that is, the identity identification information) of the payment service, length information of the signature information of the payment service, Challenge information, and length information of the Challenge information.
(3) Algorithm-related information: It is used to parse or generate a signature, and includes: signature algorithm type information and length information of the signature algorithm.
   In addition, it should be noted that, in this embodiment, the signature algorithm may be SHA256 or RSA with SHA 256. In a specific environment, the signature algorithm may also be another signature algorithm, and details are not described here.
(4) Wearable-device-related information: It is information used to enable the registration initiator to acquire a successfully registered wearable device, and includes: unique ID information of the wearable device, length information of the unique ID information, device model information, and length information of the device model information.

By means of the foregoing processing, the wearable device successfully stores payment authentication information and identity identification information of an account of the payment type service application that is bound to the wearable device. However, considering that a user may change payment credential information (for example, a payment password, a payment gesture, or the like), currently stored information may be further updated subsequently by using the following procedure. For a specific update operation, reference may be made to the registration process above, and the only difference is that, before it is determined to update the payment authentication information, it is necessary to additionally perform an identity identification information comparison process (to determine that it is an update operation of the same user), as well as a payment authentication information version comparison process (only payment authentication information of a higher version is stored). Details are not described here again.

### 2. Authentication stage

In this stage, the wearable device performs core processing of the technical solutions proposed in the present application, that is, the wearable device performs an authentication operation on a payment request process, and the process is allowed to continue only after a successful authentication operation is performed.

Specifically, as shown in FIG. 3, which is a schematic flowchart of an authentication process in an identity authentication method according to an embodiment of the present application, in this embodiment, the wearable device performs, according to a preset authentication policy, legitimacy authentication operation on a payment authentication request sent by the payment-enabled terminal, and a specific procedure is as follows:
Step S301. The wearable device receives, via the preset standard interface, a payment authentication request sent by the payment server.

In a specific application scenario, a payment operation is generally initiated by the payment-enabled terminal, wherein the payment-enabled terminal sends a payment request to the payment server, to request the payment operation, and after receiving the payment request, the payment server triggers a payment authentication process, and sends the payment authentication request to the wearable device.

The payment authentication request may be received via the preset standard interface of the wearable device.

Step S302. The wearable device parses the payment authentication request according to a preset data format standard, to acquire information carried therein.

When the payment type service application receives a payment process initiated by a user, the payment type service application initiates the payment authentication request to the preset standard interface of the wearable device. After receiving the data, the wearable device performs deserialization (a deserialization operation is a parsing operation) processing according to a preset data transmission format, to obtain verification information carried in the payment authentication request.

In a specific application scenario, in addition to the key verification information, the payment authentication request may include the following several parts of content, and certainly, on the precondition that the payment authentication operation can be implemented, the type of information carried in the payment authentication request does not affect the protection scope of the present application:
(1) Packet-related information: It is information used to identify the payment authentication request, and includes: a length of signed data and the signed data.
(2) Identity-related information: It is used to verify matching between the payment authentication request and the account bound to the wearable device, and includes: signature information (that is, the identity identification information) of the payment service, length information of the signature information of the payment service, Challenge information, and length information of the Challenge information.
(3) Algorithm-related information: It is used to parse or generate a signature, and includes: signature algorithm type information and length information of the signature algorithm.

In addition, it should be noted that, in this embodiment, the signature algorithm may be SHA256 or RSAwithSHA256. In a specific environment, the signature algorithm may also be another signature algorithm, and details are not described here.

Step S303. The wearable device verifies a binding relationship between an account corresponding to the payment authentication request and an account corresponding to locally stored payment credential information.

In a specific application scenario, the wearable device needs to compare the information obtained by deserialization with the local information, to judge whether an account of a payment type service application corresponding to the payment authentication request is an account of the payment type service application bound to the wearable device.

In a specific application scenario, it may be verified whether identity identification information carried in the message matches identity identification information corresponding to the locally stored payment credential information.

If verification succeeds, step S304 is performed. If verification fails, it can be considered that the payment authentication request corresponds to another account that is unrelated to the wearable device, and therefore the payment authentication request is directly discarded.

Step S304. The wearable device generates an identity key according to stored payment credential information of the payment-enabled terminal.

The identity key is generated by using the payment credential information stored in the ROM in the preceding binding process.

In a specific application scenario, the identity key may be encrypted by using a public key of the payment type service application, and data is serialized according to an authentication output parameter, to generate feedback data (that is, the response data packet) that can be fed back.

In a specific application scenario, in addition to the key verification information, the feedback data may include the following several parts of content, and certainly, on the precondition that the operation of feeding back the identity key can be implemented, the type of information carried in the feedback data does not affect the protection scope of the present application:
(1) Packet-related information: It is information used to identify the feedback data, and includes: a length of signed data and the signed data.
(2) Identity-related information: It is used to verify legitimacy of the feedback data, and includes: signature information (that is, the identity identification information) of the payment service, length information of the signature information of the payment service, Challenge information, and length information of the Challenge information.
(3) Algorithm-related information: It is used to parse or generate a signature, and includes: signature algorithm type information and length information of the signature algorithm.
   In addition, it should be noted that, in this embodiment, the signature algorithm may be SHA256 or RSA with SHA 256. In a specific environment, the signature algorithm may also be another signature algorithm, and details are not described here.
(4) Payment-credential-related information: It is used to enable the verification initiator to acquire the payment credential information, and includes: a length of an identity string obtained by encrypting the payment credential information that is permanently stored in the local ROM during binding, and identity string data.

Step S205. The wearable device sends feedback data according to a preset feedback rule, so that the payment server completes a fee deduction operation.

After receiving the feedback data, the payment server obtains the payment credential information by decryption, to complete a subsequent fee deduction operation.

It should be noted that the encryption/decryption manner above is assurance work for the sake of security, and on the precondition that security can be ensured, neither whether the encryption/decryption manner is used, nor whether another security protection measure is taken affects the protection scope of the present application.

### 3. Acknowledgment stage

In this stage, the wearable device returns an acknowledgment response to the user according to a payment process operation result that is fed back by the payment server.

The wearable device receives, via the preset standard interface, an acknowledgment request sent from the payment server.

The wearable device acquires acknowledgment manner type information included in the acknowledgment request.

The wearable device completes a corresponding acknowledgment operation according to the acknowledgment manner type information.

Specifically, in this embodiment, the acknowledgment manner type information included in the acknowledgment request may include any one or any combination of the following acknowledgment manners:
text acknowledgment, sound acknowledgment, and vibration acknowledgment.

Correspondingly, for example, the text acknowledgment may be directly displaying a line of characters "your payment succeeded" on the wearable device, and certainly, a precondition is that the wearable device has a display screen. The sound acknowledgment may be emitting a preset "ringtone". The vibration acknowledgment may be vibrating for a preset number of times or a continuous period of time.

This acknowledgment operation is mainly performed to enable the user to accurately know a payment result. Certainly, it may also be set that no further operation is required when payment succeeds. Such setting may be adjusted according to an actual need, and does not affect the protection scope of the present application.

Compared with the prior art, the technical solutions proposed in the embodiments of the present application include the following beneficial technical effects:
The embodiments of the present application disclose a method and a device for identity authentication, implemented to a system composed of a server and a terminal device including a preset standard interface configured to communicate with a service application of a dedicated type. By means of the technical solutions proposed in the present application, when an identity authentication operation is required, the server can request service authentication information of an account of the service application of the dedicated type from the terminal device via the preset standard interface, and the terminal device can perform security verification on this process according to a corresponding verification rule, and feed locally pre-stored service authentication information back to the server for subsequent processing only when the verification succeeds. As such, the security of an identity authentication process can be ensured by means of the preset standard interface bound to the service application of the dedicated type and security verification of the terminal device, and a terminal device operator's sense of participation in this process can be enhanced by using the identity authentication information currently stored in the terminal device. When the terminal device is specifically a wearable device, a user's sense of participation in the identity authentication process can be enhanced, the security of the identity authentication process can be improved, and an identity authentication success rate can be increased, especially for a payment authentication process.

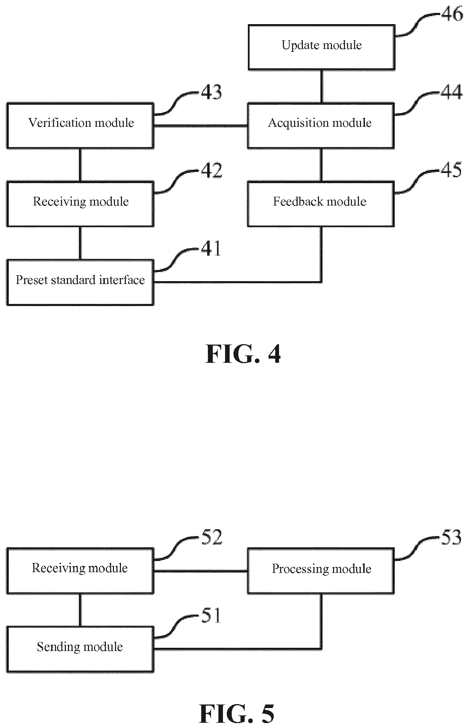

To describe the solutions provided in the preceding embodiments of the present application more clearly, based on the same invention idea as the foregoing method, the embodiments of the present application further propose a terminal device, a schematic structural diagram of which is shown in FIG. 4, and specifically includes:
a preset standard interface 41 configured to communicate with a service application of a dedicated type;
a receiving module 42 configured to receive, via the preset standard interface 41, an identity authentication request message sent by a server corresponding to the service application of the dedicated type, wherein the identity authentication request message is sent by the server to the terminal device after the server receives a service request of the service application of the dedicated type;
a verification module 43 configured to verify, according to a public key of the service application of the dedicated type, a signature in the identity authentication request message received by the receiving module 42;
an acquisition module 44 configured to acquire, when the verification by the verification module 43 succeeds, service authentication information of an account corresponding to the identity authentication request message from service authentication information pre-stored in the terminal device; and
a feedback module 45 configured to return a verification response message that carries the service authentication information acquired by the acquisition module 44 to the server via the preset standard interface 41.

In a specific application scenario,
the receiving module 42 is further configured to receive, via the preset standard interface 41, a binding registration request message for an account that is sent by the service application of the dedicated type;
the verification module 43 is further configured to verify, according to the public key of the service application of the dedicated type, a signature in the binding registration request message received by the receiving module 42;
the acquisition module 44 is further configured to acquire, when the verification by the verification module 43 succeeds, service authentication information carried in the binding registration request message, and correspondingly store the service authentication information and identity identification information of the account in the terminal device; and
the feedback module 45 is further configured to generate a registration response message according to identifier information of the terminal device, and return the registration response message to the service application of the dedicated type via the preset standard interface 41.

Further, the terminal device further includes an update module 46, where
the receiving module 42 is further configured to receive, via the preset standard interface 41, a service authentication information update request message for an account that is sent by the service application of the dedicated type;
the verification module 43 is further configured to verify, according to the public key of the service application of the dedicated type, a signature in the service authentication information update request message received by the receiving module 42, and judge, when the verification succeeds, whether identity identification information corresponding to service authentication information stored in the terminal device is consistent with identity identification information carried in the service authentication information update request message;
the acquisition module 44 is further configured to acquire, when the judgment result of the verification module 43 is yes, service authentication information carried in the service authentication information update request message; and
the update module 46 is configured to judge whether version information of the service authentication information acquired by the acquisition module 44 is higher than version information of the current corresponding service authentication information locally stored in the terminal device, and replace, if the judgment result is yes, the corresponding service authentication information currently stored in the terminal device with the service authentication information acquired by the acquisition module 44.

In a specific application scenario,
the receiving module 42 is further configured to receive, via the preset standard interface 41, an acknowledgment request that is sent by the server corresponding to the service application of the dedicated type; and
the acquisition module 44 is further configured to acquire acknowledgment manner type information included in the acknowledgment request, so that the terminal device completes a corresponding acknowledgment operation according to the acknowledgment manner type information.

According to another aspect, the embodiments of the present application further propose a server, a schematic structural diagram of which is shown in FIG. 5, wherein the server provides a service for a service application of a dedicated type, and specifically includes:
a sending module 51 configured to send, when a service request of the service application of the dedicated type is received, an identity authentication request message to a terminal device via a preset standard interface included in the terminal device;
a receiving module 52 configured to receive, when an identity authentication request succeeds, a verification response message that is returned by the terminal device via the preset standard interface and carries service authentication information; and
a processing module 53 configured to process the service request according to the service authentication message received by the receiving module 52.

In a specific application scenario,
the sending module 51 is further configured to send a binding registration request message for an account to the terminal device via the preset standard interface included in the terminal device, wherein the binding registration request message carries service authentication information of the account; and
the receiving module 52 is further configured to receive, when registration binding succeeds, a registration response message that is returned by the terminal device via the preset standard interface, and acknowledge that the terminal device is successfully bound to the account, wherein the registration response message carries identifier information of the terminal device.

Specifically, the sending module 51 is further configured to:
send, when the service authentication information of the account needs to be updated, a service authentication information update request message for the account to the terminal device via the preset standard interface included in the terminal device, wherein the service authentication information update request message carries the service authentication information needing to be updated of the account;
and/or send, after the processing module 53 completes processing of the service request, an acknowledgment request carrying acknowledgment manner type information to the terminal device via the preset standard interface included in the terminal device, so that the terminal device completes a corresponding acknowledgment operation according to the acknowledgment manner type information.

Compared with the prior art, the technical solutions proposed in the embodiments of the present application have at least the following beneficial technical effects:
The embodiments of the present application disclose a method and a device for identity authentication, implemented to a system composed of a server and a terminal device including a preset standard interface configured to communicate with a service application of a dedicated type. By means of the technical solutions proposed in the present application, when an identity authentication operation is required, the server can request service authentication information of an account of the service application of the dedicated type from the terminal device via the preset standard interface, and the terminal device can perform security verification on this process according to a corresponding verification rule, and feed locally pre-stored service authentication information back to the server for subsequent processing only when the verification succeeds. As such, the security of an identity authentication process can be ensured by means of the preset standard interface bound to the service application of the dedicated type and security verification of the terminal device, and a terminal device operator's sense of participation in this process can be enhanced by using the identity authentication information currently stored in the terminal device. When the terminal device is specifically a wearable device, a user's sense of participation in the identity authentication process can be enhanced, the security of the identity authentication process can be improved, and an identity authentication success rate can be increased, especially for a payment authentication process.

From the description of the implementation manners above, persons skilled in the art may clearly understand that the embodiments of the present invention may be implemented by hardware, or may be implemented by software plus a necessary universal hardware platform. Based on such an understanding, the technical solutions in the embodiments of the present invention may be implemented in a form of a software product. The software product may be stored in a non-volatile storage medium (which may be a CD-ROM, a USB flash disk, a removable hard disk, or the like), and includes several instructions for instructing a computer device (which may be a personal computer, a server, a network-side device, or the like) to perform all or some of the steps of the methods described in various implementation scenarios of the embodiments of the present invention.

Persons skilled in the art may understand that an accompanying drawing is merely a schematic diagram of a preferred implementation scenario, and a module or procedure in the accompanying drawings is not necessarily mandatory to implement the embodiments of the present invention.

Persons skilled in the art may understand that modules in an apparatus in an implementation scenario may be distributed in the apparatus in the implementation scenario according to an implementation scenario description, and may also be correspondingly changed and located in one or more apparatuses different from that in the implementation scenario. The modules in the implementation scenario may be combined into one module, and may also be divided into a plurality of submodules.

The sequence numbers of the foregoing embodiments of the present invention are merely for description, and do not imply the preference among the implementation scenarios.

Disclosed above are merely several specific implementation scenarios of the embodiments of the present invention. However, the embodiments of the present invention are not limited thereto. Any changes that persons skilled in the art may conceive of shall fall within the service limitation scope of the embodiments of the present invention.

## Claims

1. An identity authentication method, implemented by a wearable device comprising a payment protocol interface configured to communicate with a service application of a payment type, the service application requiring an identity authentication operation to the wearable device during specific service execution, the method specifically comprising:
configuring the wearable device to include the payment protocol interface for the communication between the wearable device and the service application of the payment type, wherein the payment protocol interface is dedicated to the payment type of the service application, wherein the payment protocol interface is configured to identify a unique payment type identifier corresponding to the service application of the payment type in a message from identity authentication request messages received from different service applications including the service application and to proceed with identity authentication with the message;
receiving, by the wearable device via the payment protocol interface, an identity authentication request message sent by a server corresponding to the service application of the payment type (S101), wherein the identity authentication request message is sent by the server to the wearable device after the server receives a service request of the service application of the payment type, and wherein the payment protocol interface processes the identity authentication request message only if the identity authentication request includes the unique identifier of the service application of the payment type;
verifying (102), by the wearable device, a signature in the identity authentication request message according to a public key of the service application of the payment type;
acquiring (103), by the wearable device if the verification succeeds, service authentication information of an account corresponding to the identity authentication request message from locally pre-stored service authentication information; and
returning (104), by the wearable device, a verification response message that comprises the acquired service authentication information to the server via the payment protocol interface.

2. The method according to claim 1, wherein the wearable device locally pre-stores service authentication information using the following process:
receiving, by the wearable device via the payment protocol interface, a binding registration request message for an account that is sent by the service application of the payment type;
verifying, by the wearable device, a signature in the binding registration request message according to the public key of the service application of the payment type;
acquiring, by the wearable device if verification succeeds, service authentication information carried in the binding registration request message, and correspondingly locally storing, by the wearable device, the service authentication information and identity identification information of the account; and
generating, by the wearable device, a registration response message according to identifier information of the wearable device, and returning, by the wearable device, the registration response message to the service application of the payment type via the payment protocol interface.

3. The method according to claim 2, wherein the generating, by the wearable device, the registration response message according to the identifier information of the wearable device specifically comprises:
acquiring, by the wearable device, unique identifier information and device model information of the wearable device;
assembling, by the wearable device, the unique identifier information and the device model information according to a data format specified by the service application of the payment type; and
signing, by the wearable device, the assembled information using a local private key, and
generating the registration response message.

4. The method according to claim 2, wherein after acquiring, by the wearable device, service authentication information carried in the binding registration request message, and correspondingly locally storing, by the wearable device, the service authentication information and identity identification information of the account locally, the method further comprises:
receiving, by the wearable device via the payment protocol interface, a service authentication information update request message for an account that is sent by the service application of the payment type;
verifying, by the wearable device, a signature in the service authentication information update request message according to the public key of the service application of the payment type;
determining, by the wearable device if verification succeeds, whether the identity identification information corresponding to the locally stored service authentication information is consistent with identity identification information carried in the service authentication information update request message;
acquiring, by the wearable device if the determination result is yes, service authentication information carried in the service authentication information update request message;
determining, by the wearable device, whether version information of the acquired service authentication information is higher than version information of the current locally stored corresponding service authentication information, comprising determining whether service authentication information currently stored in the wearable device needs to be updated; and
replacing, by the wearable device if the determination result is yes, the currently stored corresponding service authentication information with the acquired service authentication information.

5. The method according to claim 1, wherein after the returning, by the wearable device, a verification response message that carries the acquired service authentication information to the server via the payment protocol interface, the method further comprises:
receiving, by the wearable device via the payment protocol interface, an acknowledgment request that is sent by the server corresponding to the service application of the payment type;
acquiring, by the wearable device, acknowledgment manner type information comprised in the acknowledgment request; and
completing, by the wearable device, a corresponding acknowledgment operation according to the acknowledgment manner type information.

6. The method according to claim 1, wherein messages sent by other service applications are not received by the wearable device via the payment protocol interface.

7. The method according to claim 1, wherein returning, by the wearable device, a verification response message that carries the acquired service authentication information to the server via the payment protocol interface comprises:
encrypting the service authentication information;
saving the encrypted service authentication information as a response data packet; and
returning the response data packet to the server for decryption.

8. A wearable device, specifically comprising:
a payment protocol interface configured to communicate with a service application of a payment type;
multiple modules configured to perform the method according to any one of claims 1 to 7.

## Patentansprüche

1. Verfahren zur Identitätsauthentifizierung, das anhand einer tragbaren Vorrichtung implementiert wird, umfassend eine Zahlungsprotokollschnittstelle, die zum Kommunizieren mit einer Service-Anwendung eines Zahlungstyps konfiguriert ist, wobei die Service-Anwendung einen Identitätsauthentifizierungsvorgang an die tragbare Vorrichtung während bestimmter Service-Ausführung erfordert, das Verfahren insbesondere umfassend:
Konfigurieren der tragbaren Vorrichtung, sodass sie eine Zahlungsprotokollschnittstelle zum Kommunizieren zwischen der tragbaren Vorrichtung und der Service-Anwendung des Zahlungstyps umfasst, wobei die Zahlungsprotokollschnittstelle für den Zahlungstyp der Service-Anwendung zweckbestimmt ist, wobei die Zahlungsprotokollschnittstelle zum Identifizieren einer eindeutigen Zahlungstypkennung, die der Service-Anwendung des Zahlungstyps in einer Nachricht aus Identitätsauthentifizierung-Anforderungsnachrichten entspricht, die von verschiedenen Service-Anwendungen empfangen werden, die die Service-Anwendung umfassen, und zum Fortfahren mit Identitätsauthentifizierung mit der Nachricht konfiguriert ist;
Empfangen, vonseiten der tragbaren Vorrichtung über die Zahlungsprotokollschnittstelle, einer Identitätsauthentifizierung-Anforderungsnachricht, die von einem Server gesendet wird, entsprechend der Service-Anwendung des Zahlungstyps (S101), wobei die Identitätsauthentifizierung-Anforderungsnachricht vom Server an die tragbare Vorrichtung gesendet wird, nachdem der Server eine Service-Anforderung der Service-Anwendung des Zahlungstyps empfängt, und wobei die Zahlungsprotokollschnittstelle die Identitätsauthentifizierung-Anforderungsnachricht nur dann verarbeitet, wenn die Identitätsauthentifizierung-Anforderung die eindeutige Kennung der Service-Anwendung des Zahlungstyps umfasst;
Verifizieren (102), vonseiten der tragbaren Vorrichtung, einer Signatur in der Identitätsauthentifizierung-Anforderungsnachricht gemäß einem öffentlichen Schlüssel der Service-Anwendung des Zahlungstyps;
Einholen (103), vonseiten der tragbaren Vorrichtung bei erfolgreicher Verifikation, von Service-Authentifizierungsinformationen eines Kontos entsprechend der Identitätsauthentifizierung-Anforderungsnachricht von lokal vorgespeicherter Service-Authentifizierungsinformationen; und
Rücksenden (104), vonseiten der tragbaren Vorrichtung, einer Verifikationsantwortnachricht, die die eingeholten Service-Authentifizierungsinformationen umfasst, an den Server über die Zahlungsprotokollschnittstelle.

2. Verfahren nach Anspruch 1, wobei die tragbare Vorrichtung Service-Authentifizierungsinformationen lokal anhand des folgenden Prozesses vorspeichert:
Empfangen, vonseiten der tragbaren Vorrichtung über die Zahlungsprotokollschnittstelle, einer bindenden Registrierungsanforderungsnachricht für ein Konto, die von der Service-Anwendung des Zahlungstyps gesendet wird;
Verifizieren, vonseiten der tragbaren Vorrichtung, einer Signatur in der bindenden Registrierungsanforderungsnachricht gemäß dem öffentlichen Schlüssel der Service-Anwendung des Zahlungstyps;
Einholen, vonseiten der tragbaren Vorrichtung bei erfolgreicher Verifikation, von Service-Authentifizierungsinformationen, die in der bindenden Registrierungsanforderungsnachricht übertragen werden, und entsprechend lokales Speichern, vonseiten der tragbaren Vorrichtung, der Service-Authentifizierungsinformationen und Identitäts-Identifizierungsinformationen des Kontos; und
Erzeugen, vonseiten der tragbaren Vorrichtung, einer Registrierungsantwortnachricht gemäß der Kennungsinformationen der tragbaren Vorrichtung, und Rücksenden, vonseiten der tragbaren Vorrichtung, der Registrierungsantwortnachricht an die Service-Anwendung des Zahlungstyps über die Zahlungsprotokollschnittstelle.

3. Verfahren nach Anspruch 2, wobei das Erzeugen, vonseiten der tragbaren Vorrichtung, der Registrierungsantwortnachricht gemäß der Kennungsinformationen der tragbaren Vorrichtung insbesondere umfasst:
Einholen, vonseiten der tragbaren Vorrichtung, von eindeutigen Kennungsinformationen und Vorrichtungsmodellinformationen der tragbaren Vorrichtung;
Assemblieren, vonseiten der tragbaren Vorrichtung, der eindeutigen Kennungsinformationen und der Vorrichtungsmodellinformationen gemäß einem Datenformat, das von der Service-Anwendung des Zahlungstyps bestimmt wird; und
Signieren, vonseiten der tragbaren Vorrichtung, der assemblierten Informationen anhand eines lokalen privaten Schüssels, und
Erzeugen der Registrierungsantwortnachricht.

4. Verfahren nach Anspruch 2, wobei nach dem Einholen, vonseiten der tragbaren Vorrichtung, der Service-Authentifizierungsinformationen, die in der bindenden Registrierungsanforderungsnachricht übertragen werden, und entsprechendem Speichern, vonseiten der tragbaren Vorrichtung, der Service-Authentifizierungsinformationen und Identitäts-Identifizierungsinformationen des Kontos lokal, das Verfahren ferner umfasst:
Empfangen, vonseiten der tragbaren Vorrichtung über die Zahlungsprotokollschnittstelle, einer Anforderungsnachricht zum Aktualisieren der Service-Authentifizierungsinformationen für ein Konto, die von der Service-Anwendung des Zahlungstyps gesendet wird;
Verifizieren, vonseiten der tragbaren Vorrichtung, einer Signatur in der Anforderungsnachricht zum Aktualisieren der Service-Authentifizierungsinformationen gemäß dem öffentlichen Schlüssel der Service-Anwendung des Zahlungstyps;
Feststellen, vonseiten der tragbaren Vorrichtung bei erfolgreicher Verifikation, ob die Identitäts-Identifizierungsinformationen, die den lokal gespeicherten Service-Authentifizierungsinformationen entsprechen, mit den Identitäts-Identifizierungsinformationen übereinstimmen, die in der Anforderungsnachricht zum Aktualisieren der Service-Authentifizierungsinformationen übertragen wird;
Einholen, vonseiten der tragbaren Vorrichtung bei einem Feststellungsergebnis von "ja", der Service-Authentifizierungsinformationen, die in der Anforderungsnachricht zum Aktualisieren der Service-Authentifizierungsinformationen übertragen wird;
Feststellen, vonseiten der tragbaren Vorrichtung, ob Versionsinformationen der eingeholten Service-Authentifizierungsinformationen höher als Versionsinformationen der aktuellen lokal gespeicherten entsprechenden Service-Authentifizierungsinformationen sind, umfassend das Feststellen, ob die aktuell in der tragbaren Vorrichtung gespeicherten Service-Authentifizierungsinformationen aktualisiert werden müssen; und
Ersetzen, vonseiten der tragbaren Vorrichtung bei einem Feststellungsergebnis von "ja", der aktuell gespeicherten entsprechenden Service-Authentifizierungsinformationen mit den eingeholten Service-Authentifizierungsinformationen.

5. Verfahren nach Anspruch 1, wobei nach dem Rücksenden, vonseiten der tragbaren Vorrichtung, einer Verifikationsantwortnachricht, die die eingeholten Service-Authentifizierungsinformationen an den Server über die Zahlungsprotokollschnittstelle überträgt, das Verfahren ferner umfasst:
Empfangen, vonseiten der tragbaren Vorrichtung über die Zahlungsprotokollschnittstelle, einer Bestätigungsanforderung, die vom Server gesendet wird, entsprechend Service-Anwendung des Zahlungstyps entspricht;
Einholen, vonseiten der tragbaren Vorrichtung, von Bestätigungsweisetyp-Informationen, die in der Bestätigungsanforderung enthalten sind; und
Ausführen, vonseiten der tragbaren Vorrichtung, eines entsprechenden Bestätigungsvorgangs gemäß den Bestätigungsweisetyp-Informationen.

6. Verfahren nach Anspruch 1, wobei Nachrichten, die von anderen Service-Anwendungen gesendet werden, nicht vonseiten der tragbaren Vorrichtung über die Zahlungsprotokollschnittstelle empfangen werden.

7. Verfahren nach Anspruch 1, wobei das Rücksenden, vonseiten der tragbaren Vorrichtung, einer Verifikationsantwortnachricht, die die eingeholten Service-Authentifizierungsinformationen überträgt, an den Server über die Zahlungsprotokollschnittstelle umfasst:
Verschlüsseln der Service-Authentifizierungsinformationen;
Speichern der verschlüsselten Service-Authentifizierungsinformationen als Antwortdatenpaket; und
Rücksenden des Antwortdatenpakets an den Server zum Entschlüsseln.

8. Tragbare Vorrichtung, insbesondere umfassend:
eine Zahlungsprotokollschnittstelle, die zum Kommunizieren mit einer Service-Anwendung eines Zahlungstyps konfiguriert ist;
mehrere Module, die zum Durchführen des Verfahrens nach einem der Ansprüche 1 bis 7 konfiguriert sind.

## Revendications

1. Procédé d'authentification d'identités, mis en œuvre par un dispositif portable comprenant une interface de protocole de paiement configurée pour communiquer avec une application de service d'un type de paiement, l'application de service nécessitant une opération d'authentification d'identité sur le dispositif portable pendant l'exécution de service spécifique, le procédé comprenant spécifiquement :
la configuration du dispositif portable de manière à inclure l'interface de protocole de paiement pour la communication entre le dispositif portable et l'application de service du type de paiement, l'interface de protocole de paiement étant dédiée au type de paiement de l'application de service, l'interface de protocole de paiement étant configurée de manière à identifier un identifiant de type de paiement unique correspondant à l'application de service du type de paiement dans un message provenant de messages de demande d'authentification d'identité reçus de différentes applications de service, y compris l'application de service, et de manière à procéder à l'authentification d'identité avec le message ;
la réception, par le dispositif portable par le biais de l'interface de protocole de paiement, d'un message de demande d'authentification d'identité envoyé par un serveur correspondant à l'application de service du type de paiement (S101), le message de demande d'authentification d'identité étant envoyé par le serveur au dispositif portable après que le serveur a reçu une demande de service de l'application de service du type de paiement, et l'interface de protocole de paiement traitant le message de demande d'authentification d'identité uniquement si la demande d'authentification d'identité comprend l'identifiant unique de l'application de service du type de paiement ;
la vérification (102),
par le dispositif portable, d'une signature dans le message de demande d'authentification d'identité selon une clé publique de l'application de service du type de paiement ;
l'acquisition (103),
par le dispositif portable si la vérification réussit, des informations d'authentification de service d'un compte correspondant au message de demande d'authentification d'identité à partir d'informations d'authentification de service localement préenregistrées ; et
le renvoi (104),
par le dispositif portable, d'un message de réponse de vérification qui comprend les informations d'authentification de service acquises au serveur par le biais de l'interface de protocole de paiement.

2. Procédé selon la revendication 1, dans lequel le dispositif portable pré-enregistre localement des informations d'authentification de service en utilisant le procédé suivant :
la réception, par le dispositif portable par le biais de l'interface de protocole de paiement, d'un message de demande d'enregistrement obligatoire pour un compte qui est envoyé par l'application de service du type de paiement ;
la vérification, par le dispositif portable, d'une signature dans le message de demande d'enregistrement obligatoire selon la clé publique de l'application de service du type de paiement ;
l'acquisition, par le dispositif portable si la vérification réussit, des informations d'authentification de service transportées dans le message de demande d'enregistrement obligatoire, et l'enregistrement local de manière correspondante, par le dispositif portable, des informations d'authentification de service et des informations d'identification d'identité du compte ; et
la génération, par le dispositif portable, d'un message de réponse d'enregistrement en fonction des informations d'identifiant du dispositif portable, et le renvoi, par le dispositif portable, du message de réponse d'enregistrement à l'application de service du type de paiement par le biais de l'interface de protocole de paiement.

3. Procédé selon la revendication 2, dans lequel la génération, par le dispositif portable, du message de réponse d'enregistrement en fonction des informations d'identifiant du dispositif portable comprend spécifiquement :
l'acquisition, par le dispositif portable, des informations d'identifiant unique et des informations de modèle de dispositif du dispositif portable ;
l'assemblage, par le dispositif portable, des informations d'identifiant unique et des informations de modèle de dispositif selon un format de données spécifié par l'application de service du type de paiement ; et
la signature, par le dispositif portable, des informations assemblées à l'aide d'une clé privée locale, et la génération du message de réponse d'enregistrement.

4. Procédé selon la revendication 2, dans lequel après l'acquisition, par le dispositif portable, des informations d'authentification de service transportées dans le message de demande d'enregistrement obligatoire, et l'enregistrement local de manière correspondante, par le dispositif portable, des informations d'authentification de service et des informations d'identification d'identité du compte localement, le procédé comprend en outre :
la réception, par le dispositif portable par le biais de l'interface de protocole de paiement, d'un message de demande de mise à jour des informations d'authentification du service pour un compte qui est envoyé par l'application de service du type de paiement ;
la vérification, par le dispositif portable, d'une signature dans le message de demande de mise à jour des informations d'authentification du service selon la clé publique de l'application de service du type de paiement ;
la détermination, par le dispositif portable si la vérification réussit, si les informations d'identification d'identité correspondant aux informations d'authentification de service enregistrées localement sont cohérentes avec les informations d'identification d'identité transportées dans le message de demande de mise à jour des informations d'authentification de service ;
l'acquisition, par le dispositif portable si le résultat de la détermination est oui, des informations d'authentification de service transportées dans le message de demande de mise à jour des informations d'authentification de service ;
la détermination, par le dispositif portable, si les informations de version des informations d'authentification de service acquises sont supérieures aux informations de version des informations d'authentification de service correspondantes actuellement enregistrées localement, comprenant la détermination si les informations d'authentification de service actuellement enregistrées dans le dispositif portable doivent être mises à jour ; et
le remplacement, par le dispositif portable si le résultat de la détermination est oui, des informations d'authentification de service correspondantes actuellement enregistrées par les informations d'authentification de service acquises.

5. Procédé selon la revendication 1, dans lequel après le renvoi, par le dispositif portable, d'un message de réponse de vérification qui transporte les informations d'authentification de service acquises vers le serveur par le biais de l'interface de protocole de paiement, le procédé comprend en outre :
la réception, par le dispositif portable par le biais de l'interface de protocole de paiement, d'une demande d'accusé de réception qui est envoyée par le serveur correspondant à l'application de service du type de paiement ;
l'acquisition, par le dispositif portable, des informations de type de mode d'accusé de réception comprises dans la demande d'accusé de réception ; et
la réalisation, par le dispositif portable, d'une opération d'accusé de réception correspondante en fonction des informations de type de mode d'accusé de réception.

6. Procédé selon la revendication 1, dans lequel les messages envoyés par d'autres applications de service ne sont pas reçus par le dispositif portable par le biais de l'interface de protocole de paiement.

7. Procédé selon la revendication 1, dans lequel le renvoi, par le dispositif portable, d'un message de réponse de vérification qui transporte les informations d'authentification de service acquises vers le serveur par le biais de l'interface de protocole de paiement, comprend :
le chiffrement des informations d'authentification de service ;
la sauvegarde des informations d'authentification de service chiffrées sous forme de paquet de données de réponse ; et
le renvoi du paquet de données de réponse au serveur pour déchiffrement.

8. Dispositif portable, comprenant spécifiquement :
une interface de protocole de paiement configurée pour communiquer avec une application de service d'un type de paiement ;
plusieurs modules configurés pour exécuter le procédé selon l'une quelconque des revendications 1 à 7.
